# EUROPEAN PATENT APPLICATION

(11) **EP 2 284 604 A2**
(43) Date of publication of application: **16.02.2011**
(21) Application number: 10161369.3
(22) Date of filing: 28.04.2010
(51) Int. Cl.: G02F 1/1347, G02F 1/13357, H04M 1/22, G02F 1/1334

(54) **Display apparatus and mobile terminal**

(30) Priority: 11.08.2009 JP 2009186806
(71) Applicant: Sony Ericsson Mobile Communications AB, 221 88 Lund (SE)
(72) Inventor: Kido, Nobuhiko, Tokyo (JP)
(74) Representative: Jackson, Jonathan Andrew

(57) **Abstract**

A display apparatus includes at least three layers respectively including members that transmit light when voltages are applied to the members and disperse the light when the voltages are not applied to the members; light-emitting units that respectively emit light beams of different colors from side surfaces of the at least three layers; transparent layers sealed in spaces among the at least three layers, the transparent layers having a refractive index such that the light beams respectively emitted on the at least three layers from the light-emitting units are totally internally reflected by the at least three layers; and a display control unit that individually switches on and off the voltages to be applied to the at least three layers.

## Description

The present invention relates to a display apparatus and a mobile terminal.

In recent years, a display apparatus including a transparent display has been developed. The transparent display allows a background on a back surface of the display to be displayed while displaying information, such as a figure and a character, on a display surface of the display. The development has been promoted by using various materials. As a result, a display apparatus including a transparent display having a polymer dispersed liquid crystal (polymer network liquid crystal) therein is gradually put to practical use. The polymer dispersed liquid crystal disperses incident light when an applied voltage is off, and directly transmits the light when the applied voltage is on. Thus, the polymer dispersed liquid crystal can be used for the transparent display.

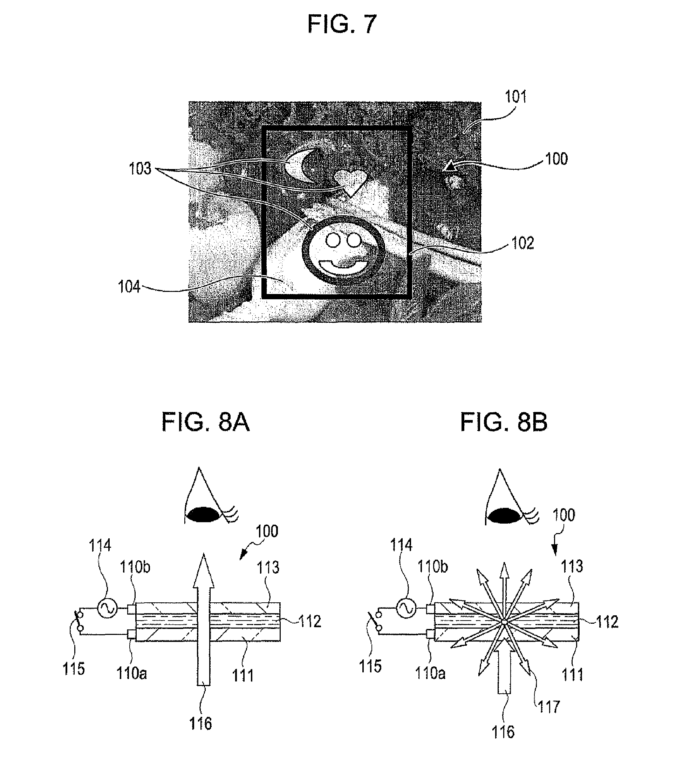

Fig. 7 is an explanatory view showing an example of use of a transparent display.

A transparent display 100 is provided in a display apparatus (not shown). The transparent display 100 displays a background, a figure, a character, etc., within a rectangular frame of a display area 102. When the transparent display 100 is used to transmit a background 101, a voltage is applied to a polymer dispersed liquid crystal (see Figs. 8A and 8B, described later) to attain a transparent mode. In the transparent mode, the background 101 is transmitted and displayed in a transparent mode display area 104. When a figure, a character, etc., are displayed on the transparent display 100, the voltage is not applied to the polymer dispersed liquid crystal to attain a dispersive mode. In the dispersive mode, a figure, a character, etc., are displayed in a dispersive mode display area 103.

Figs. 8A and 8B are cross-sectional views showing the transparent display.

Fig. 8A is an explanatory view showing an example of a light beam in the transparent mode.

The transparent display 100 includes a first glass plate 111, a polymer dispersed liquid crystal 112, and a second glass plate 113. The first glass plate 111 and the second glass plate 113 respectively have a first electrode 110a and a second electrode 110b. The electrodes 110 are connected with a power supply 114 through conductors. A switch 115 is provided in the conductor between the power supply 114 and the first electrode 110a. The switch 115 switches on and off the voltage. When the switch 115 is turned on, the voltage is applied to the polymer dispersed liquid crystal 112, and molecules constituting the liquid crystal are aligned along an electric field. Thus, a light beam 116 from the outside is transmitted through the transparent display 100. At this time, when a user views the transparent display 100 from the side near the second glass plate 113, the user can view the background on the side near the first glass plate 111.

Fig. 8B is an explanatory view showing an example of a light beam in the dispersive mode.

When the switch 115 is turned off, the voltage applied to the polymer dispersed liquid crystal 112 becomes zero, and the direction of the molecules constituting the liquid crystal are misaligned. When light is incident on such liquid crystal, the light is reflected in various directions, or dispersed. Thus, the light beam 116 from the outside is dispersed around as dispersed light 117 by the polymer dispersed liquid crystal 112. At this time, when the user views the transparent display 100 from the side near the second glass plate 113, the user can view the first glass plate 111 that is opaque.

The transmissivity and contrast of such a transparent display 100 significantly affect display quality. The display quality can be increased if the contrast is increased in the dispersive mode, and if the transmissivity (transparency) is increased in the transparent mode.

Meanwhile, a typical liquid crystal color display includes a color filter that is inserted between a liquid crystal member and a polarizing plate for providing color display (for attaining color liquid crystal). When such a structure is applied to the transparent display, since the color filter has a very low transmissivity, it is difficult to attain the transparency in the transparent mode.

To provide the transparency in the transparent mode, the transparent display should not include a color filter. A technique that attains color liquid crystal without a color filter may be a display system called a field sequential system. The field sequential system performs color display by switching screens of three colors including red, green, and blue at a high speed.

To create the screens of the three colors including red, green, and blue, a display body includes a back light or a side light. The back light is opaque. Hence, if the back light is provided on the back surface of the display body, the transparent display is not provided. Owing to this, the side light is used for the transparent display.

Japanese Patent Application Publication No. 2006-106614 discloses a technique relating to a liquid crystal display apparatus that uses a side light and is capable of performing field sequential display with reflective liquid crystal.

The display that uses the field sequential system has to alternately turn on a red light beam, a green light beam, and a blue light beam from light sources at a time interval of about 6 ms, and the response time of liquid crystal to the light has to be within about 3 ms. Thus, the speed of signal control and the speed of liquid crystal driving have to be higher than those of a typical color liquid crystal display. In addition, since the response speed is decreased at a low temperature, color breakup may likely occur.

Accordingly, it is desirable to provide color display on a display screen while transmitting a background.

A display apparatus according to an embodiment of the present invention includes at least three layers respectively including members that transmit light when voltages are applied to the members and disperse the light when the voltages are not applied to the members; light-emitting units that respectively emit light beams of different colors from side surfaces of the at least three layers; transparent layers sealed in spaces among the at least three layers, the transparent layers having a refractive index such that the light beams respectively emitted on the at least three layers from the light-emitting units are totally internally reflected by the at least three layers; and a display control unit that individually switches on and off the voltages to be applied to the at least three layers.

The at least three transparent layers respectively including polymer dispersed liquid crystals etc., and only the light beams of the different colors, for example, light beams of blue, green, and red colors, can enter the layers. In addition, the voltages to be applied to the polymer dispersed liquid crystals in the respective layers can be individually switched on and off. That is, dispersion of light beams by the polymer dispersed liquid crystals in the respective layers can be individually controlled. Accordingly, the combination of the polymer dispersed liquid crystals to be brought into the dispersion state can be changed.

With this embodiment, the color display can be provided on the display screen while the background is transmitted.

Preferably each of the apparatus and terminal displays colors on a display screen of a transparent display.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a block diagram showing an exemplary inner structure of a mobile terminal according to a first embodiment of the present invention;
Fig. 2 is an exploded perspective view showing a transparent display according to the first embodiment of the present invention;
Fig. 3 is an explanatory view showing an electric circuit around the transparent display according to the first embodiment of the present invention;
Fig. 4 is a circuit diagram showing a liquid crystal pixel in the transparent display according to the first embodiment of the present invention;
Fig. 5 is a cross-sectional view showing a predetermined liquid crystal pixel in the transparent display according to the first embodiment of the present invention;
Fig. 6 is a cross-sectional view relating to a transparent display according to a modification of the present invention;
Fig. 7 is an explanatory view showing an example of use of a transparent display of

### related art; and

Figs. 8A and 8B are explanatory views each showing a configuration of respective layers in a sectional view of the transparent display of related art, the views showing an example of a change in light beam upon switching of a mode.

Embodiments for implementing the present invention will be described below. The description is provided in the following order.
1. First Embodiment (Example of Mobile Terminal Including Transparent Display)
2. Modification

### <1. First Embodiment>

### [Configuration of Mobile Terminal]

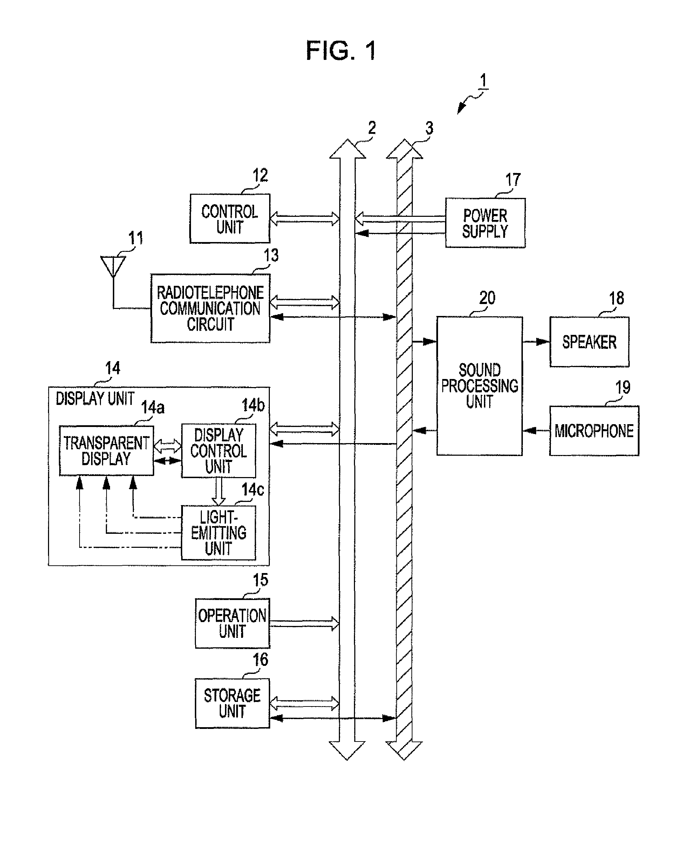

Fig. 1 illustrates an exemplary inner structure of a mobile terminal 1 according to this embodiment.

Applied to this embodiment is the mobile terminal 1 that performs radio communication between the mobile terminal 1 and a base station through radiotelephone network of any of various mobile radio communication systems, such as code division multiple access (CDMA) system. The mobile terminal 1 of this embodiment includes a power supply 17 that supplies respective parts with electric power. The power supply 17 uses, for example, a secondary battery (lithium-ion battery).

The mobile terminal 1 includes a radiotelephone communication circuit 13 serving as a radio communication unit that performs radio communication between the mobile terminal 1 and a base station for radiotelephone. The radiotelephone communication circuit 13 performs communication by a predetermined communication system. An antenna 11 is connected to the radiotelephone communication circuit 13. Though not shown, the mobile terminal 1 may include a communication circuit for near field radio communication, such as Bluetooth (registered trademark) or wireless local area network (LAN), in addition to the radiotelephone communication circuit 13.

The radio communication with the radiotelephone communication circuit 13 is executed under the control of a control unit 12 included in the mobile terminal 1. The control unit 12 functions as a communication control unit. The control unit 12 may also control processing for wireless connection with the base station. The control unit 12 transmits and receives control data to and from respective parts in the mobile terminal 1 through a control line 2, to control functions in the terminal other than the radio communication.

The mobile terminal 1 includes a display unit 14 that is, for example, a liquid crystal panel. The display unit 14 displays various pieces of information under the control of the control unit 12. The provided display may be a display relating to transmission and reception of a phone call; a display of registration information, such as a telephone directly and an e-mail address list; a display of a received mail and a transmitted mail; and a display of an image that is downloaded through the Internet.

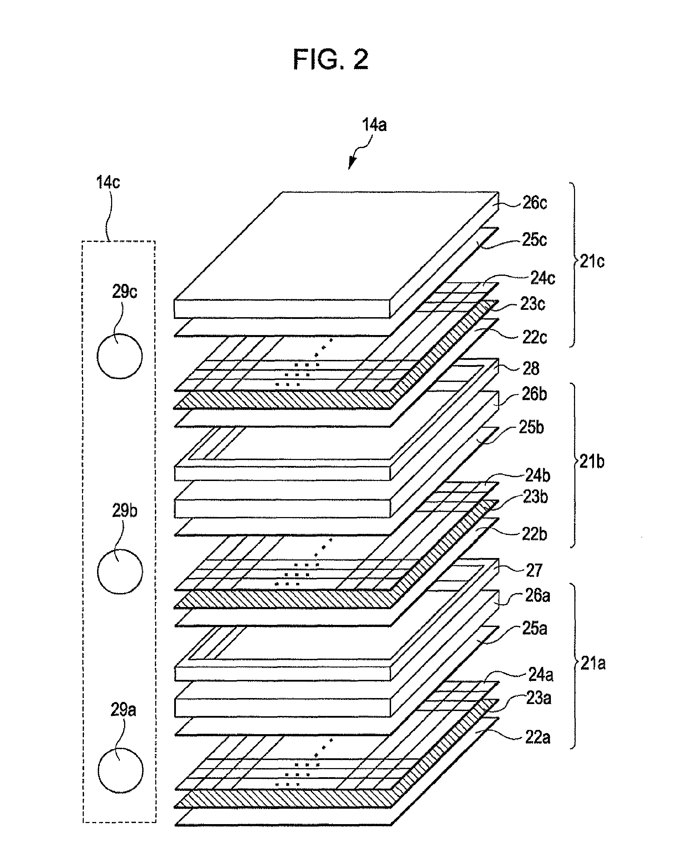

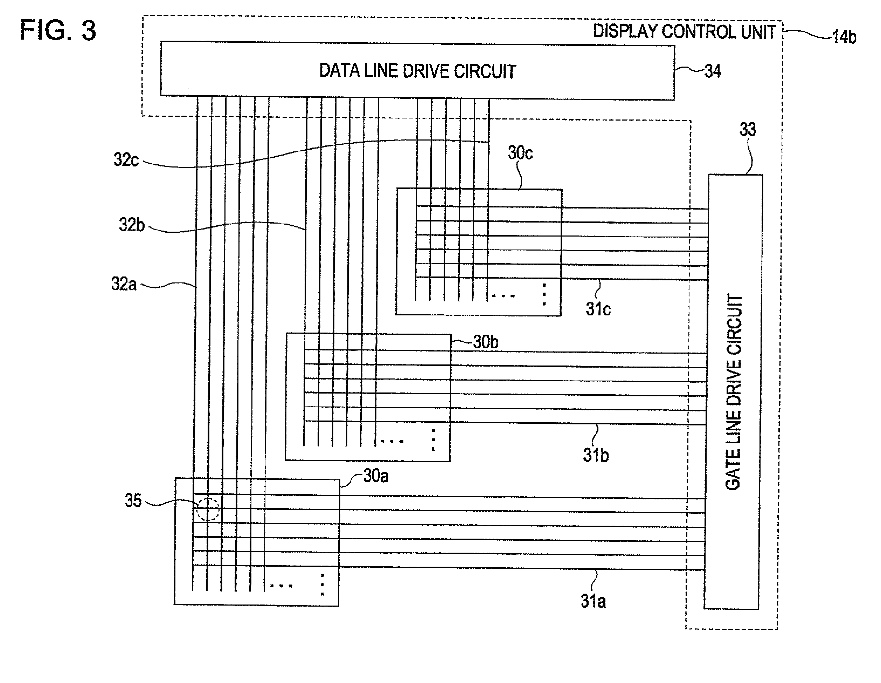

The display unit 14 in this embodiment includes a transparent display 14a, a display control unit 14b, and a light-emitting unit 14c. The transparent display 14a switches a state between a transparent state and an opaque state by turning on and off a voltage applied thereto from the power supply 17. The display control unit 14b controls on/off of the voltage to be applied to the transparent display 14a. The light-emitting unit 14c is a side light that illuminates the transparent display 14a. The transparent display 14a includes a polymer dispersed liquid crystal 23 (see Fig. 2, described later) that becomes transparent or opaque when the voltage is on or off. The display control unit 14b switches on and off the voltage to be applied to the polymer dispersed liquid crystal 23 for individual pixels. The light-emitting unit 14c includes light sources of red, green, and blue colors. The light sources each use, for example, a light emitting diode (LED) or an organic electro luminescence (EL). The method, by which the display control unit 14b switches on and off the voltage to be applied to the polymer dispersed liquid crystal 23 for individual pixels, will be described with reference to Fig. 3.

The control unit 12 controls a transparent mode, in which the transparent display 14a allows light to be transmitted therethrough, and a dispersive mode, in which the transparent display 14a inhibits light to be transmitted therethrough and becomes opaque. When the control unit 12 is in the transparent mode, the display control unit 14b turns on the voltage, and hence the transparent display 14a becomes transparent. That is, the light incident on the transparent display 14a is not dispersed in the transparent display 14a and is transmitted through the transparent display 14a. Accordingly, the user can view a background through the transparent display 14a. In contrast, when the control unit 12 is in the dispersive mode, the display control unit 14b turns off the voltage, and hence the transparent display 14a becomes opaque. The light output from the light-emitting unit 14c is reflected. At this time, an icon, an image, a character, etc., can be displayed on the transparent display 14a with colors. The display control unit 14b also controls the light sources of red, green, and blue colors of the light-emitting units 14c.

The mobile terminal 1 includes an operation unit 15. The control unit 12 performs various processing on the basis of an operation with the operation unit 15. For example, transmission through radiotelephone communication, transmission and reception of e-mails, designation of the start and end of data communication such as making an access to the Internet, etc., are executed in response to an operation with a key that is prepared as the operation unit 15.

In the mobile terminal 1, a storage unit 16 is connected to the control line 2 and a data line 3. For example, the storage unit 16 stores data that is necessary to be received from the outside and stored. The storage unit 16 also stores a program that is necessary for the control processing by the control unit 12. The storage unit 16 is, for example, a flash memory, a hard disk drive, etc.

When sound data is contained in a packet received by the radiotelephone communication circuit 13, the sound data is extracted. The sound data extracted from the received packet is supplied to a sound processing unit 20 through the data line 3. The sound processing unit 20 demodulates the sound data into an analogue sound signal. The demodulated analogue sound signal is supplied to a speaker 18, so that the sound is output.

The mobile terminal 1 includes a microphone 19 to which sound is input. A sound signal is collected by the microphone 19. The sound processing unit 20 modulates the sound signal into sound data for transmission, and supplies the modulated sound data to the radiotelephone communication circuit 13. The radiotelephone communication circuit 13 locates the supplied sound data within a packet to be transmitted to the base station, and then transmits the packet to the base station by radio transmission.

It is to be noted that a back light, a substrate, a casing body, etc., which may degrade the transparency, are not arranged on the display unit 14 of the mobile terminal 1, in particular, on the back surface of the transparent display 14a.

### [Configuration of Transparent Display]

Fig. 2 is an exploded perspective view showing a configuration of the transparent display 14a.

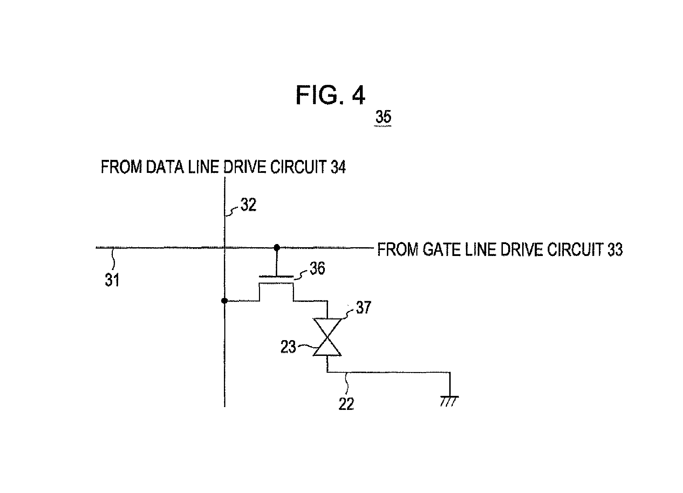

The transparent display 14a includes a first layer 21 a, a second layer 21 b, and a third layer 21 c. The first layer 21a includes a counter electrode 22a, which is common to all liquid crystal pixels and is on a glass plate (not shown); a polymer dispersed liquid crystal 23a; an array substrate 24a on a glass plate (not shown); a transparent adhesive sheet 25a; and a light guide plate 26a, which guides the light from the light-emitting unit 14c to the entire surface. The array substrate 24a includes a pixel electrode 37, which are provided for each of individual pixels, and a TFT 36 (described later with reference to Fig. 4). The first layer 21a is formed by laminating these components. The second and third layers 21 b and 21 c have configurations similar to that of the first layer 21a.

The transparent display 14a is formed by laminating the first layer 21a, a spacer 27 that provides a predetermined gap between the first layer 21a and the second layer 21b, the second layer 21b, a spacer 28 that provides a predetermined gap between the second layer 21b and the third layer 21c, and the third layer 21c. A red light source 29a, a green light source 29b, and a blue light source 29c are provided respectively on side surfaces of the light guide plates 26a, 26b, and 26c. The light sources 29a, 29b, and 29c cause a red light beam, a green light beam, and a blue light beam to respectively enter the first layer 21a, the second layer 2 1 b, and the third layer 2 1 c.

The array substrates 24a, 24b, and 24c, and the counter electrodes 22a, 22b, and 22c, respectively provided in the first layer 21 a, the second layer 21b, and the third layer 21c are electrically connected to the display control unit 14b. The display control unit 14b controls the voltages to be applied to the polymer dispersed liquid crystals 23a, 23b, and 23c for individual pixels. It is to be noted that a layer including the counter electrode 22, the polymer dispersed liquid crystal 23, and the array substrate 24 is called a liquid crystal panel 30 in the following description.

Fig. 3 is an explanatory view showing the liquid crystal panel 30 and the display control unit 14b. In each of liquid crystal panels 30a, 30b, and 30c, a number of liquid crystal pixels 35, the number which is the same as the number of pixels, are arranged in matrix. The liquid crystal panels 30a, 30b, and 30c respectively correspond to the counter electrodes 22a, 22b, and 22c, the polymer dispersed liquid crystals 23a, 23b, and 23c, and the array substrates 24a, 24b, and 24c, as shown in Fig. 2.

Each of the liquid crystal pixels 35 includes the pixel electrode 37, the counter electrode 22, and the polymer dispersed liquid crystal 23 held between these electrodes, as shown in Fig. 4. A thin film transistor (TFT) 36, which serves as a switch element, controls supply of an image signal to each of the liquid crystal pixels 35.

The TFT 36 has a gate connected to a gate line 31 that is common for each row, and a drain connected to a data line 32 that is common for each column. The TFT 36 has a source connected to the pixel electrode 37. Also, the counter electrode 22 corresponding to all liquid crystal pixels 35 is connected to the ground.

A gate line drive circuit 33 is connected to the liquid crystal panels 30a, 30b, and 30c respectively through gate lines 31a, 31b, and 31c. The gate line drive circuit 33 successively selects one of the gate lines 31a, one of the gate lines 31b, and one of the gate lines 31c. Then, the gate line drive circuit 33 supplies the selected gate lines 31a, 31b, and 31c with selection pulses to control the on/off states of the respective TFTs 36.

A data line drive circuit 34 is connected to the liquid crystal panels 30a, 30b, and 30c respectively through data lines 32a, 32b, and 32c. The data line drive circuit 34 outputs image signals to the drains of the TFTs 36 connected to the gate lines 31a, 31b, and 31c selected by the gate line drive circuit 33, respectively through the data lines 32a, 32b, and 32c.

Accordingly, the voltages, which correspond to the selection signals that are input to the gates of the TFTs 36 of the respective rows and the image signals that are input to the drains thereof, are applied to the polymer dispersed liquid crystals 23 of the respective rows through the pixel electrodes 37 of the respective rows of the liquid crystal panels 30a, 30b, and 30c.

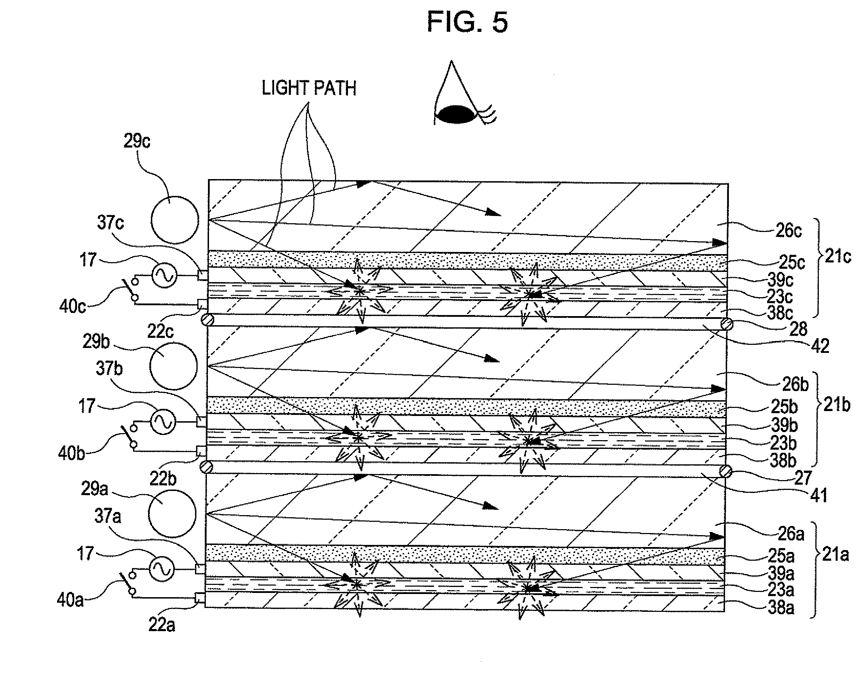

Fig. 5 is a cross-sectional view schematically showing a portion corresponding to a liquid crystal pixel 35 of the transparent display. An array substrate glass plate 39 corresponds to the glass plate (not shown) on which the array substrate 24 (see Fig. 2) is provided. A counter electrode glass plate 38 corresponds to the glass plate (not shown) on which the counter electrode 22 is provided. It is to be noted that the positional relationship between the pixel electrode 37 and the array substrate glass plate 39, and the positional relationship between the counter electrode 22 and the counter electrode glass plate 38, shown in Fig. 5, merely schematically represent the positional relationships shown in Fig. 2.

The polymer dispersed liquid crystal 23 is sealed in a space between the counter electrode glass plate 38 and the array substrate glass plate 39. The polymer dispersed liquid crystal 23 transmits light when the voltage that is supplied from the power supply 17 through the counter electrode 22 and the pixel electrode 37 is on, and disperses the light when the voltage is off. Herein, the pixel electrode 37 is connected to the power supply 17, and a switch 40 that switches on and off the voltage is provided between the power supply 17 and the counter electrode 22. The switch 40 corresponds to the TFT 36 (see Fig. 4).

The adhesive sheet 25 bonds the array substrate glass plate 39 and the light guide plate 26 together. The adhesive sheet 25 is laminated on the array substrate glass plate 39, has a predetermined refractive index, and serves as a transparent portion that transmits light. The refractive index of the adhesive sheet 25 is desirably a value close to refractive indices of the polymer dispersed liquid crystal 23 and the light guide plate 26, in order to prevent refraction of light from occurring at the boundaries of the light guide plate 26, the adhesive sheet 25, and the polymer dispersed liquid crystal 23 when the light passes through the three layers.

The light guide plates 26, the surfaces of which emit the light beams from the red light source 29a, the green light source 29b, and the blue light source 29c, each are formed of a transparent member, such as acrylic resin or glass. Each of the light guide plate 26 is laminated on the adhesive sheet 25. The light guide plate 26 has a lower refractive index than the refractive index of the adhesive sheet 25. Accordingly, the light transmitted through the light guide plate 26 and reaches the adhesive sheet 25 is transmitted through the adhesive sheet 25 with a predetermined angle of refraction, and reaches the array substrate 24 and the polymer dispersed liquid crystal 23.

An air layer 41 is provided between the first layer 21a and the second layer 21b, and an air layer 42 is provided between the second layer 21b and the third layer 21c. The air layers 41 and 42 prevent the red light beam, the green light beam, and the blue light beam from entering layers other than the first layer 21a, the second layer 21b, and the third layer 21c. The air has a sufficiently low refractive index as compared with the refractive indices of the light guide plate 26 and the counter electrode glass plate 38. Since the air layers 41 and 42 are provided, the light beams that respectively enter the first to third layers 21 are totally internally reflected by the surfaces of the first to third layers 21. In particular, when the relationship between an angle of incidence of incident light, which is from the inside toward the outside of the surface of each layer, and an angle of emission of emitted light satisfies the condition of total internal reflection, the incident light is totally internally reflected and is enclosed in the corresponding layer. In contrast, when the relationship does not satisfy the condition of total internal reflection, for example, in a case of light that is incident perpendicularly or substantially perpendicularly, the light is emitted to the outside from the surface of the corresponding layer. To provide the air layers 41 and 42, the spacer 27 is provided between the first layer 21a and the second layer 21 b, and the spacer 28 is provided between the second layer 21b and the third layer 21c.

If the switch 40 is turned on, the voltage is applied to the polymer dispersed liquid crystal 23, and molecules constituting the liquid crystal in the polymer dispersed liquid crystal 23 are aligned along an electric field. The light from the outside is transmitted through the transparent display 14a. At this time, when the user views the transparent display 14a from the side near the light guide plate 26c, the user can view the background on the back side of the counter electrode glass plate 38. In contrast, if the switch 40 is turned off, the array of the molecules constituting the polymer dispersed liquid crystal 23 is misaligned. Accordingly, the light from the outside is dispersed (hereinafter, referred to as "dispersed light") in the polymer dispersed liquid crystal 23. Then, the user views the dispersed light mainly having light, which is incident substantially perpendicularly to the surface of the light guide plate 26 and does not satisfy the condition of total internal reflection.

For example, if only a red switch 40a in the first layer 21a is turned off, the molecules constituting the liquid crystals in the polymer dispersed liquid crystals 23b and 23c are aligned whereas the molecules constituting the liquid crystal in the polymer dispersed liquid crystal 23a are misaligned. Thus, only the red light beam from the red light source 29a is dispersed in the polymer dispersed liquid crystal 23a. Accordingly, the user views that predetermined liquid crystal pixels 35 of the transparent display 14a are red. If the red switch 40a in the first layer 21a and a blue switch 40c in the third layer 21c are turned off, the molecules constituting the liquid crystal in the polymer dispersed liquid crystal 23b are aligned, whereas the molecules constituting the liquid crystals in the polymer dispersed liquid crystals 23a and 23c are misaligned. Thus, the red light beam and the blue light beam from the red light source 29a and the blue light source 29c are dispersed respectively in the polymer dispersed liquid crystals 23a and 23c. Accordingly, the user views that predetermined liquid crystal pixels 35 of the transparent display 14a have a color in which the red light beam and the blue light beam are combined, i.e., purple. As described above, colors can be displayed on the liquid crystal display by controlling the combination of the switches 40 to be turned on and off, and the voltages to be applied to the polymer dispersed liquid crystals 23 with the display control unit 14b for the individual liquid crystal pixels 35. Herein, a switch 40b is a green switch for the second layer 21b.

In the first embodiment of the present invention, the first to third layers respectively including the polymer dispersed liquid crystals are provided, and the blue light beam, the green light beam, and the red light beam can enter only the corresponding layers. In addition, the voltages to be applied to the polymer dispersed liquid crystals of the respective layers can be individually turned on and off. That is, the dispersion of the light beams with the polymer dispersed liquid crystals in the respective layers can be individually controlled. Thus, the combination of the polymer dispersed liquid crystals to be brought into the dispersion state can be changed. Accordingly, the colors can be displayed while the background is transmitted. In addition, when the colors are displayed, the pixels do not have to be divided into sub-pixels. Thus, increase in definition can be attained.

### <2. Modification>

To increase the quantity of light emitted by the surface of the light guide plate 26, a reflection unit that reflects light to the light guide plate 26 may be provided.

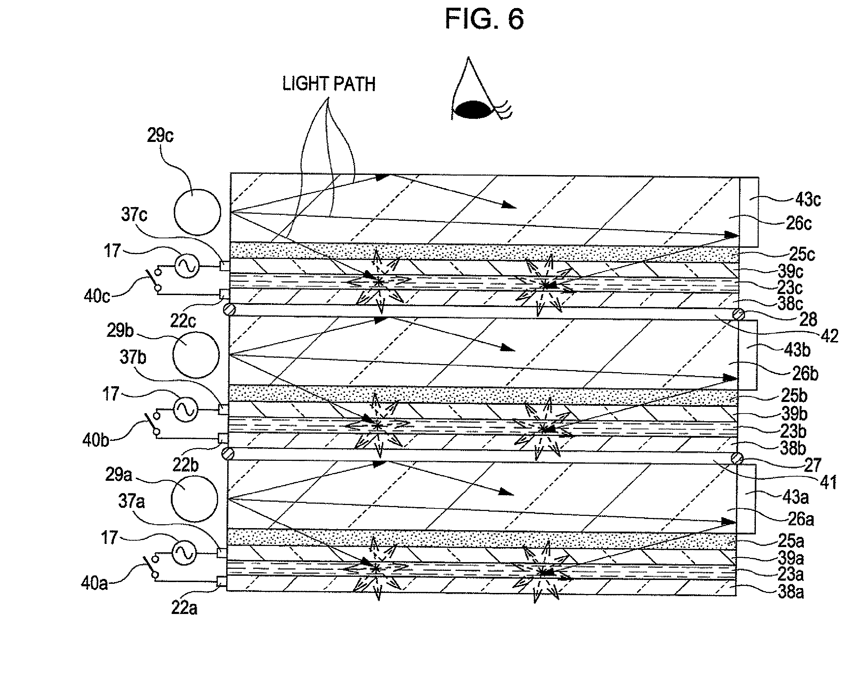

Fig. 6 illustrates an example in a cross section of the transparent display 14a provided with a reflection sheet serving as the reflection unit that reflects light.

The transparent display 14a of this embodiment includes a reflection sheet 43 that reflects the light that is transmitted through the light guide plate 26. The reflection sheet 43 is arranged on each of side surfaces of the light guide plates 26a, 26b, and 26c, the side surfaces being located respectively opposite to the red light source 29a, the green light source 29b, and the blue light source 29c. The reflection sheet 43 is formed of a material that reflects light, such as an enhanced specular reflector (ESR) sheet. The reflection sheets 43 are closely attached to the side surfaces of the light guide plates 26, and reflect the light beams transmitted through the light guide plates 26 along light paths and reach the reflection sheets 43, toward the light guide plates 26. Accordingly, a loss of light is decreased, and the quantity of light on the display surface is increased. Thus, even when a light-emitting unit 14c with a low brightness is used, a figure, a character, etc., can be displayed on the display surface with a brightness substantially similar to that in the case of the transparent display 14a without the reflection sheet 43. Visibility of the display by the user is increased.

In the above-described embodiments, the polymer dispersed liquid crystal is used as a configuration that transmits light when a voltage is on, and disperses the light when the voltage is off. However, the configuration is not limited to the polymer dispersed liquid crystal as long as the configuration is a dispersion layer having similar characteristics.

In the above-described embodiments, the dispersion layer that transmits light when a voltage is on, and disperses the light when the voltage is off is used. However, even if a dispersion layer is used, which transmits light when a voltage is off, and disperses the light when the voltage is on, the colors can be displayed while the background is transmitted. In this case, however, the control of switching on and off the voltage by the display control unit 14b is performed in a reverse manner to that of the above-described embodiments.

In the above-described embodiments, the three layers of the first layer for red, the second layer for green, and the third layer for blue are provided to display colors. However, at least a layer (a layer of a color other than red, green, and blue) having a configuration similar to those of the first to third layers may be additionally provided, and the plurality of layers may be used, to reproduce colors by combining the plurality of colors.

The order of red, green, and blue are not limited to the order described in the above-described embodiments.

In the above-described embodiments, the spacers 27 and 28 with frames are provided. However, it is not limited thereto, and the spacers 27 and 28 may be replaced with transparent layers, which are sealed in spaces between the first and second layers, and between the second and third layers, and have a refractive index that causes the red, green, and blue light beams to be totally internally reflected respectively by the first to third layers. For example, a predetermined number of spacers, each having, for example, a spherical shape, may be arranged at a plurality of positions between the first and second layers, and between the second and third layers. The spacers in this case may be desirably transparent.

Also, instead of the adhesive sheet 25, an adhesive, such as an ultraviolet-curable resin, which becomes transparent when the adhesive is cured, may be used. The light-emitting unit 14c is not limited to the LED, and may be other illumination device.

The present application contains subject matter related to that disclosed in Japanese Priority Patent Application JP 2009-186806 filed in the Japan Patent Office on August 11, 2009, the entire content of which is hereby incorporated by reference.

It should be understood by those skilled in the art that various modifications, combinations, sub-combinations and alterations may occur depending on design requirements and other factors insofar as they are within the scope of the appended claims.

## Claims

1. A display apparatus comprising:
at least three layers respectively including members that transmit light when voltages are applied to the members and disperse the light when the voltages are not applied to the members;
light-emitting units that respectively emit light beams of different colors from side surfaces of the at least three layers;
transparent layers sealed in spaces among the at least three layers, the transparent layers having a refractive index such that the light beams respectively emitted on the at least three layers from the light-emitting units are totally internally reflected by the at least three layers; and
a display control unit that individually switches on and off the voltages to be applied to the at least three layers.

2. The display apparatus according to claim 1,
wherein the at least three layers each include
a pixel electrode plate including pixel electrodes arranged in an array and connected to a power supply, the pixel electrode plate configured to transmit the light beam emitted from the light-emitting unit,
a counter electrode plate including a counter electrode connected to the power supply, the counter electrode plate configured to transmit the light beam emitted from the light-emitting unit,
a dispersion layer sealed in a space between the pixel electrode plate and the counter electrode plate, the dispersion layer configured to transmit the light beam emitted from the light-emitting unit when a voltage supplied from the power supply through the pixel electrodes and the counter electrode is turned on and disperse the light beam emitted from the light-emitting unit when the voltage is turned off, and
a light guide plate laminated on the pixel electrode plate and configured to emit light from a surface thereof to a side that is visually recognized by a user, and
wherein the display control unit individually switches on and off the voltages to be applied to the pixel electrodes and the counter electrodes of the respective layers.

3. The display apparatus according to claim 2,
wherein the at least three layers include
a first layer that displays a color of red,
a second layer that displays a color of green,
a third layer that displays a color of blue, and
wherein the light-emitting unit includes
a red light source that is arranged at a predetermined position on a side surface of the first layer and emits a red light beam,
a green light source that is arranged at a predetermined position on a side surface of the second layer and emits a green light beam, and
a blue light source that is arranged at a predetermined position on a side surface of the third layer and emits a blue light beam.

4. The display apparatus according to claim 1, wherein the transparent layer is an air layer sealed by a spacer.

5. The display apparatus according to claim 3, wherein the red light source, the green light source, and the blue light source are respectively arranged on side surfaces of the light guide plates in the first to third layers.

6. The display apparatus according to claim 3, further comprising reflection units that are provided respectively on side surfaces of the light guide plates in the first to third layers at positions located opposite to the red light source, the green light source, and the blue light source, the reflection units configured to reflect the light from the light guide plates.

7. The display apparatus according to claim 2, wherein the dispersion layer in each of the first to third layers is a polymer dispersed liquid crystal.

8. A mobile terminal comprising:
at least three layers respectively including members that transmit light when voltages are applied to the members and disperse the light when the voltages are not applied to the members;
light-emitting units that respectively emit light beams of different colors from side surfaces of the at least three layers;
transparent layers sealed in spaces among the at least three layers, the transparent layers having a refractive index such that the light beams respectively emitted on the at least three layers from the light-emitting units are totally internally reflected by the at least three layers; and
a display control unit that individually switches on and off the voltages to be applied to the at least three layers.
